# EUROPÄISCHE PATENTSCHRIFT

(11) **EP 1 068 049 B1**
(45) Veröffentlichungstag und Bekanntmachung des Hinweises auf die Patenterteilung: **11.12.2002**
(21) Anmeldenummer: 99910362.5
(22) Anmeldetag: 18.03.1999
(51) Int. Cl.: B25B 5/06

(54) **SPANNVORRICHTUNG FÜR DIE HALTERUNG VON KAROSSERIEBAUTEILEN**
FASTENING DEVICE FOR HOLDING IN POSITION CAR BODY COMPONENTS
DISPOSITIF DE SERRAGE POUR MAINTENIR DES ELEMENTS DE CARROSSERIE

(30) Priorität: 09.04.1998 DE 19816014
(43) Veröffentlichungstag der Anmeldung: 17.01.2001
(73) Patentinhaber: Volkswagen Aktiengesellschaft, 38436 Wolfsburg (DE)
(72) Erfinder: HAMMER, Thorge, D-38554 Weyhausen (DE)
(86) Internationale Anmeldenummer: EP9901808
(87) Internationale Veröffentlichungsnummer: WO99052679

(56) Entgegenhaltungen:
- DE-A- 19 622 575
- DE-U- 7 438 202
- FR-A- 800 797
- FR-A- 2 207 780
- GB-A- 587 971
- GB-A- 1 339 672
- US-A- 2 040 466
- US-A- 2 556 306

## Beschreibung

Die vorliegende Erfindung betrifft eine Spannvorrichtung für die Halterung von Karosseriebauteilen, insbesondere eine Spannvorrichtung für die Halterung von Karosseriebauteilen, die als Bleche ausgeführt sind, umfassend die im Oberbegriffs des Anspruchs 1 definierten Merkmale.

Eine Spannvorrichtung der vorgenannten Art ist aus der DE 196 22 575 A1 bekannt. Mit einer derartigen Spannvorrichtung können beispielsweise zwei Karosseriebleche aneinander gepreßt werden, so daß sie längs einer Verbindungsnaht miteinander verschweißt werden können. Insbesondere wenn die Bleche mittels Laser- oder Elektronenstrahl miteinander verschweißt werden sollen, müssen die beiden Bleche so fest aneinander gedrückt werden, daß eventuell vorhandene Restwelligkeiten so stark minimiert werden, daß ein Spalt von bevorzugt weniger als 0,2 mm zwischen den Blechen verbleibt. Die in der genannten Patentanmeldung beschriebene Spannvorrichtung weist innerhalb mehrerer aneinandergereihter Hohlkörper jeweils ein im wesentlichen schlauchförmiges dehnbares Element auf, das pneumatisch oder hydraulisch mit Druck beaufschlagt werden kann. Dieses Element kann Stempel aus dem Hohlkörper herausdrücken, die dann lokalen Druck beispielsweise auf das obere der beiden Bleche ausüben. Aufgrund der starren verwendeten Hohlkörper und der nur beabstandet voneinander auf die Oberfläche des Bleches einwirkenden Stempel können dreidimensional verformte Bleche in der Regel mit der vorbekannten Spannvorrichtung nicht so aneinander gepreßt werden, daß sie mittels eines Laser- oder Elektronenstrahls in der gewünschten Verbindungsnahtqualität miteinander verschweißt werden können.

Das der vorliegenden Erfindung zugrundeliegende Problem ist die Weiterentwicklung einer Spannvorrichtung der eingangs genannten Art dahingehend, daß mit ihr Karosseriebauteile so gleichmäßig und fest aneinandergedrückt werden können, daß ein Verschweißen der Karosseriebauteile insbesondere mittels Laser- oder Elektronenstrahl in guter Verbindungsnahtqualität möglich wird.

Diese Aufgabe wird gelöst bein einer Spannvorrichtung gattungs bildender Art durch die im Kennzeichen des Anspruchs 1 angeführten Merkmale. Aufgrund der Tatsache, daß gegebenenfalls ein Großteil des Spannweges durch das gegenüber der Anlagefläche bewegbare Spannbauteil zurückgelegt werden kann, müssen die Andrückelemente gegebenenfalls nur noch einen geringen Restweg aufbringen, so daß das pneumatische und/oder hydraulische System und die Druckmembran entsprechend kleiner und einfacher und damit kostengünstiger dimensioniert werden können. Außerdem wird das Ein- und Ausbringen der Karosseriebauteile in die Vorrichtung erleichtert. Durch die erfindungsgemäße Anordnung können die beispielsweise als Bleche ausgeführten Karosseriebauteile auf einfache Weise zumindest weitgehend spaltfrei aneinandergedrückt werden.

Vorteilhafterweise ist das Spannbauteil gegenüber der Anlagefläche um ein verriegelbares Drehgelenk verschwenkbar. Auf diese Weise wird das Zurücklegen des Hauptspannweges durch ein einfaches Verschwenken des Spannbauteils gegenüber der Anlagefläche erzielt. Natürlich ist es beispielsweise auch möglich, das Spannbauteil linear verfahrbar gegenüber der Anlagefläche auszubilden.

Gemäß einer bevorzugten Ausführungsform der vorliegenden Erfindung ist an dem Spannbauteil ein Hohlkörper befestigt, der die vorzugsweise als schlauchförmiges, dehnbares Element ausgebildete Druckmembran aufnehmen kann, wobei das schlauchförmige, dehnbare Element vorzugsweise mit einer pneumatischen und/oder hydraulischen Druckleitung koppelbar ist.

Gemäß einer Ausführungsform der vorliegenden Erfindung weist der Hohlkörper einen U-förmigen Querschnitt auf und ist auf der der Anlagefläche zugewandten Seite offen, wobei auf der offenen Seite des Hohlkörpers die Druckmembran auf die Andrückelemente einwirken kann. Vorteilhafterweise sind hierbei die Andrückelemente schwenkbar an dem Hohlkörper befestigt und weisen zumindest im wesentlichen vorzugsweise eine L-Form auf mit einem etwa parallel zur Anlagefläche verlaufenden Schenkel und einem etwa senkrecht zur Anlagefläche verlaufenden Schenkel. An dem anlageflächenseitigen Ende des etwa senkrecht verlaufenden Schenkels ist bevorzugt eine Andrückrundung ausgeformt, um Dellen in der Oberfläche der Karosseriebauteile durch das Anpressen der Schenkelenden zu vermeiden. Vorteilhafterweise befindet sich die Wirkverbindung zwischen Druckmembran und etwa parallel zur Anlagefläche verlaufendem Schenkel in der Nähe der gelenkigen Ankopplung an den Hohlkörper, so daß durch einen relativ kleinen, durch Ausdehnung der Druckmembran bewirkten Hub ein relativ großer Hub des etwa senkrecht zur Anlagefläche verlaufenden Schenkels erzielt wird.

Vorteilhafterweise liegen in einer Richtung senkrecht zu dem etwa parallel zur Anlagefläche verlaufenden Schenkel und etwa parallel zur Anlagefläche die Andrückelemente im wesentlichen dicht aneinander, wobei ihre Breite an die Welligkeit der Karosseriebauteile anpaßbar ist. Durch das dichte Aneinanderliegen der Andrückelemente wird gewährleistet, daß auch bei hoher Restwelligkeit der Karosseriebauteile der Spalt zwischen diesen an jeder Stelle der geplanten Schweißnaht geeignet minimiert wird. Die Breite der Andrückelemente, die entlang der geplanten Nahtkontur auch unterschiedlich gewählt werden kann, kann entsprechend der durch die etwaige dreidimensionale Form der Karosseriebauteile hervorgerufenen Welligkeit geeignet bemessen werden.

Gemäß einer alternativen Ausführungsform der vorliegenden Erfindung weist der Hohlkörper einen im wesentlichen rechteckigen Querschnitt auf, wobei die der Anlagefläche zugewandte Seite des Hohlkörpers Bohrungen für die Führung der Andrückelemente aufweist. Hierbei sind die Andrückelemente vorzugsweise als Druckstempel ausgeführt, die jeweils über einen Kopf verfügen, der mit der Druckmembran in Wirkverbindung steht.

Die Anlagefläche kann aus der Oberfläche einer ebenen Platte bestehen. Falls jedoch dreidimensional geformte Bleche miteinander verschweißt werden sollen, empfiehlt es sich, die Anlagefläche als dreidimensional geformte 3D-Kontur auszuführen, die zumindest im wesentlichen an die Kontur der zu verschweißenden Karosseriebauteile angepaßt ist.

Weitere Vorteile und Merkmale der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine perspektivische schematische Ansicht einer Ausführungsform einer erfindungsgemäßen Spannvorrichtung;
- Fig. 2: einen Querschnitt durch die Spannvorrichtung gemäß Fig. 1;
- Fig. 3: eine perspektivische schematische Detailansicht einer weiteren Ausführungsform einer erfindungsgemäßen Spannvorrichtung.

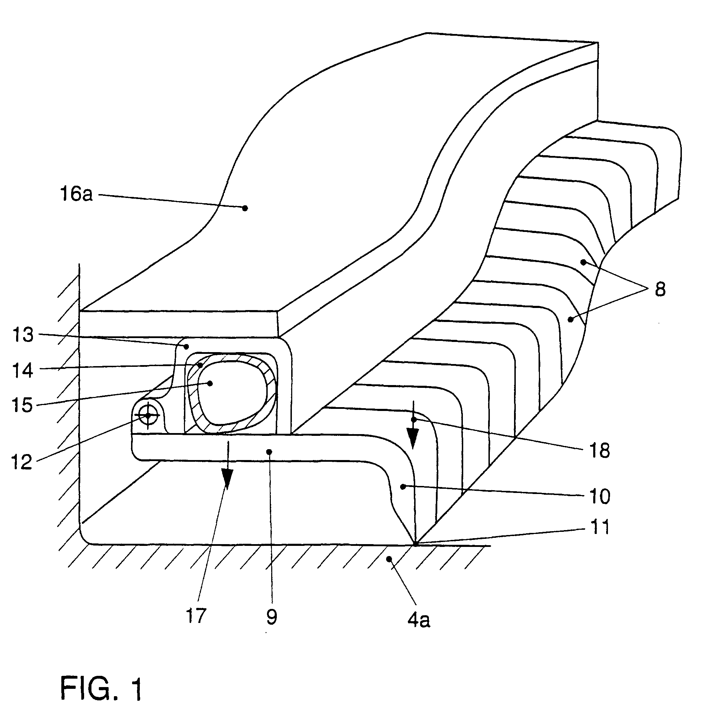

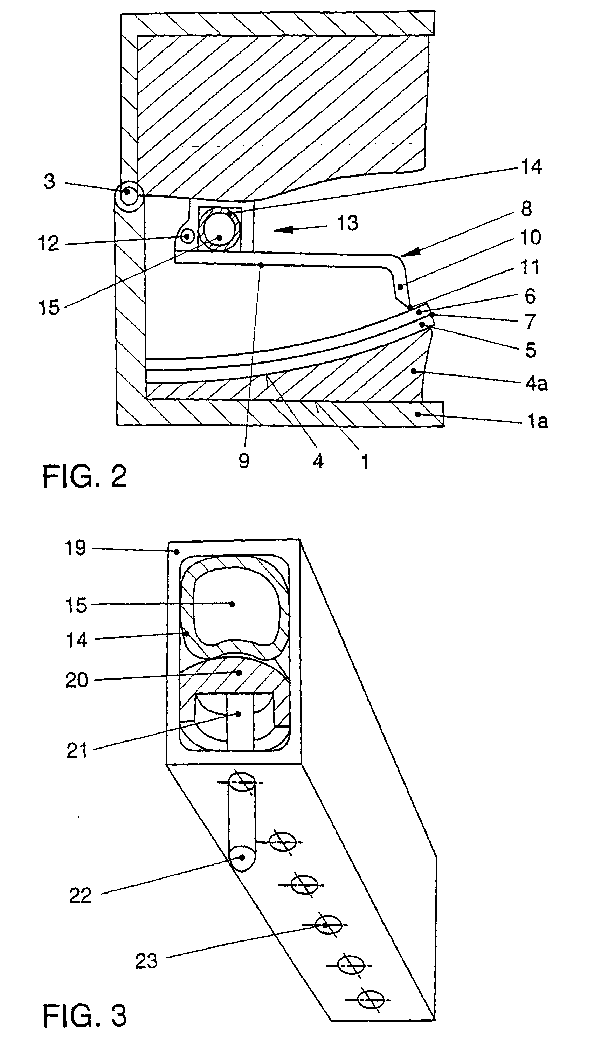

Wie aus Fig. 2 ersichtlich ist, umfaßt das in den Fig. 1 und Fig. 2 abgebildete Ausführungsbeispiel eine ebene, horizontale Standplatte 1a und eine Gegenplatte 2, die gegenüber der Standplatte 1 um ein verriegelbares Drehgelenk 3 verschwenkbar ist. Die Standplatte 1a kann mit einer fest oder auswechselbar angebrachten unteren 3D-Konturenplatte 4a mit einer unteren 3D-Kontur-Oberfläche 4 versehen sein, die als Auflagefläche für dreidimensional verformte Bleche 5, 6 dienen kann, die beispielsweise mittels eines Laserstrahls längs einer Verbindungslinie 7 durch eine Kehlnaht miteinander verschweißt werden sollen.

Auf die Oberseite des oberen Blechs 6 wird mittels einer Vielzahl von Andrückelementen 8 an vielen Stellen lokal Druck ausgeübt. In dem in Fig. 1 und Fig. 2 abgebildeten Ausführungsbeispiel weisen die Andrückelemente 8 einen langen, im wesentlichen horizontal ausgerichteten Schenkel 9 und einen kurzen, mit dem langen Schenkel 9 verbundenen, sich im wesentlichen vertikal erstreckenden Schenkel 10 auf, der an seiner Unterseite in eine Andrückrundung 11 ausläuft. An seinem von dem vertikalen Schenkel 10 abgewandten Ende ist der etwa horizontal verlaufende Schenkel 9 an einem Hohlkörper 13 über ein Gelenk 12 verschwenkbar angelenkt. Der Hohlkörper 13 hat einen nach unten offenen U-förmigen Querschnitt und umgibt einen Druckschlauch 14, dessen Innenkammer 15 über nicht dargestellte Pneumatik- oder Hydraulikanschlüsse mit einem Innendruck beaufschlagt werden kann. Durch (nicht dargestellte) Drehfedern liegen die Andrückelemente 8 im drucklosen Zustand des Druckschlauchs 14 unter Federvorspannung an dem Hohlkörper 13 an. Der U-förmige Hohlkörper 13 ist mit seiner Oberseite an der Unterseite einer oberen 3D-Konturenplatte 16a angebracht, die wiederum an der Unterseite der Gegenplatte 2 befestigt ist.

In Fig. 1 ist angedeutet, daß die untere dreidimensional geformte 3D-Kontur 4 und die die Unterseite der oberen dreidimensional geformten 3D-Konturplatte 16a bildende obere 3D-Kontur 16 dem dreidimensionalen Verlauf der Bleche 5, 6 in etwa folgen. Weiterhin ist auch die Breite der Andrückelemente 8 etwa der zu erwartenden Welligkeit der dreidimensional verformten Bleche 5, 6 angepaßt. Je größer die zu erwartende Welligkeit der Bleche 5, 6 ist, desto kleiner sollte (zumindest in den betreffenden Abschnitten der Verbindungslinie 7) die Breite der Andrückelemente 8 gewählt werden. Um die bei einer Laserstrahlverschweißung störenden Restwelligkeiten der Bleche 5, 6 zu beseitigen, wird in einem ersten Arbeitsgang die Gegenplatte 2 mit der darunter befindlichen 3D-Kontur 16 sowie dem Hohlkörper 13 und den daran angelenkten Andrückelementen 8 um das Drehgelenk 3 gegenüber der Standplatte 1 nach unten geschwenkt und verriegelt, so daß die Andrückrundungen 11 der Andrückelemente 8 im wesentlichen auf der Oberseite des oberen Blechs 6 aufliegen oder sich in der Nähe der Oberseite befinden. Anschließend wird die Innenkammer 15 des Druckschlauchs 14 mit Druck beaufschlagt, so daß der Druckschlauch 14 als Druckmembran wirkt und auf die horizontalen Schenkel 9 der Andrückelemente 8 eine Kraft in Richtung des Pfeiles 17 ausübt. Durch die schwenkbare Anlenkung der Andrückelemente 8 an dem Hohlkörper 13 über das Gelenk 12 werden die sich etwa vertikal erstreckenden Schenkel 10 der Andrückelemente 8 in Richtung des Pfeiles 18 auf die Oberseite des oberen Bleches 6 gepreßt. Aufgrund der Tatsache, daß der Druckschlauch 14 in der Nähe des Gelenks 12 auf den horizontalen Schenkel 9 drückt, ist der Hub am Ort des Pfeiles 18 durch die Hebelwirkung wesentlich größer als am Ort des Pfeiles 17, so daß trotz einer relativ geringen Querschnittsvergrößerung des Druckschlauches 14 die Andrückrundungen 11 mit einem ausreichenden Hub so gegen die Oberseite des Bleches 6 gedrückt werden, daß Restwelligkeiten der Bleche 5, 6 soweit beseitigt werden, daß ein Kehlnaht-Laserstrahlschweißen längs der Verbindungslinie 7 problemlos möglich ist.

Der Einsatz der in Fig. 1 und Fig. 2 abgebildeten Ausführungsform einer erfindungsgemäßen Spannvorrichtung ist auch bei planen, nicht dreidimensional verformten, zu spannenden Karosseriebauteilen möglich. Hierbei kann entweder auf die 3D-Konturenenplatten 4a, 16a verzichtet werden, so daß dann z. B. die ebene Oberfläche der ebenen Standplatte 1a die Anlagefläche 1 ausbildet, oder aber es können anstelle der 3D-Konturenplatten 4a, 16a im wesentlichen rechtwinklige Platten Verwendung finden.

In Fig. 3 ist ein Ausführungsbeispiel eines Details einer anderen Ausführungsform einer erfindungsgemäßen Spannvorrichtung abgebildet, bei der der die Druckmembran ausbildende Druckschlauch 14 von einem Hohlkörper 19 aufgenommen ist, der einen rechteckigen geschlossenen Querschnitt aufweist. Der Druckschlauch 14 wirkt in diesem Ausführungsbeispiel nicht auf den Schenkel eines L-förmigen Andrückelements, sondern jeweils auf den Kopf 20 eines als Andrückelement wirkenden Druckstempels 21, der an seinem von dem Kopf 20 abgewandten Ende eine halbkugelförmige Andrückfläche 22 aufweist. Der Druckstempel 21 erstreckt sich durch kreisförmige Bohrungen 23 in einer der Schmalseiten des etwa rechteckigen Hohlkörpers 19.

In einer einfachen Ausführungsform kann das in Fig. 3 abgebildete Detai einer Spannvorrichtung beispielsweise an der Unterseite einer Gegenplatte 2 befestigt sein, wie sie in Fig. 2 abgebildet ist. Die Druckstempel 21 drücken nach Beaufschlagung der Innenkammer 15 mit einem Innendruck auf die Oberfläche des oberen zweier Bleche 5, 6, die beispielsweise auf der Oberfläche 1 einer Standplatte 1a aufgelegt sind, die der Standplatte 1a in Fig. 2 entsprechen kann. Die Abstände der Bohrungen 23 und damit die Abstände der Druckstempel 21 zueinander sollten so gewählt werden, daß sie der zu erwartenden Restwelligkeit der zu verschweißenden Bleche dahingehend entsprechen, daß die Restwelligkeit auf ein für das Laser- oder Elektronenstrahlschweißen erträgliches Maß durch das Andrücken der Druckstempel 21 bzw. deren Andrückflächen 22 reduziert wird.

Um mit dem in Fig. 3 abgebildeten Teil einer erfindungsgemäßen Spannvorrichtung dreidimensional geformte Bleche aneinander anzudrücken, kann der Hohlkörper 19 eine der Kontur der Bleche entsprechende 3D-Kontur aufweisen. Auch hier kann dementsprechend der Abstand der Bohrungen 23 zueinander sowie die Größe und die Form der Andrückflächen 22 an die dreidimensionale Kontur der Bleche angepaßt werden.

### BEZUGSZEICHENLISTE

- 1: Anlagefläche, als Oberfläche von 1a ausgebildet
- 1a: Standplatte
- 2: Gegenplatte
- 3: Drehgelenk
- 4: Anlagefläche, als untere 3D-Kontur-Oberfläche von 4a ausgebildet
- 4a: untere 3D-Konturenplatte
- 5, 6: Bleche
- 7: Verbindungslinie
- 8: Andrückelement
- 9: waagerechter Schenkel von 8

- 10: sich vertikal erstreckender Schenkel von 8
- 11: Andrückrundung von 10
- 12: Gelenk
- 13: Hohlkörper
- 14: die Druckmembran ausbildender Druckschlauch
- 15: Innenkammer
- 16: obere 3D-Kontur-Oberfläche, von 16a ausgebildet
- 16a: obere 3D-Konturenplatte
- 17, 18: Pfeil

- 19: Hohlkörper, rechteckig
- 20: Kopf von 21
- 21: Druckstempel
- 22: Andrückfläche von 21
- 23: Bohrung in 19

## Patentansprüche

1. Spannvorrichtung für die Halterung von Karosseriebauteilen (5, 6) mit dreidimensionaler Oberfläche, die insbesondere als Bleche ausgeführt sind, umfassend eine Anlagefläche (1, 4), an der die Karosseriebauteile (5, 6) anliegen können sowie Andrückelemente (8, 21), die mit einer pneumatisch und/oder hydraulisch beaufschlagbaren Druckmembran (14) in Wirkverbindung stehen und die die Karosseriebauteile (5, 6) aneinander und/oder gegen die Anlagefläche (1) drücken können, wobei die Spannvorrichtung einen Hohlkörper (13, 19) umfaßt, der die Druckmembran (14) aufnimmt, und wobei die Andrückelemente (8, 21) und die Druckmembran (14) an einem Spannbauteil (16a) gehaltert sind, das in Richtung auf die Anlagefläche (1, 4) bewegt und gegenüber dieser festgelegt werden kann, wobei das Spannbauteil (16a) eine dreidimensionale Oberfläche (16) aufweist, die zumindest im wesentlichen an die dreidimensionale Oberfläche der Karosseriebauteile (5, 6) angepaßt ist, **dadurch gekennzeichnet, daß** der Hohlkörper (13, 19) eine dreidimensionale Oberfläche aufweist, die im wesentlichen an die dreidimensionale Oberfläche (16) des Spannbauteiles (16a) angepaßt ist, und die an der von dem Spannbauteil (16a) ausgebildeten dreidimensionalen Oberfläche (16) befestigt ist.

2. Spannvorrichtung nach Anspruch 1, **dadurch gekennzeichnet, daß** das Spannbauteil gegenüber der Anlagefläche (1, 4) um ein verriegelbares Drehgelenk (3) verschwenkbar ist.

3. Spannvorrichtung nach einem der Ansprüche 1 oder 2, **dadurch gekennzeichnet, daß** die Druckmembran (14) durch ein schlauchförmiges, dehnbares Element gebildet ist, das mit einer pneumatischen und/oder hydraulischen Druckleitung koppelbar ist.

4. Spannvorrichtung nach Anspruch 3, **dadurch gekennzeichnet, daß** der Hohlkörper (13) einen U-förmigen Querschnitt ausweist und auf der der Anlagefläche (1, 4) zugewandten Seite offen ist, wobei auf der offenen Seite des Hohlkörpers (13) die Druckmembran (14) auf die Andrückelemente (8) einwirken kann.

5. Spannvorrichtung nach Anspruch 4, **dadurch gekennzeichnet, daß** die Andrückelemente (8) schwenkbar an dem Hohlkörper (13) befestigt sind.

6. Spannvorrichtung nach einem der Ansprüche 4 oder 5, **dadurch gekennzeichnet, daß** die Andrückelemente (8) zumindest im wesentlichen eine L-Form aufweisen, mit einem etwa parallel zur Anlagefläche (1, 4) verlaufenden Schenkel (9) und einem etwa senkrecht zur Anlagefläche (1, 4) verlaufenden Schenkel (10).

7. Spannvorrichtung nach Anspruch 6, **dadurch gekennzeichnet, daß** am anlageflächenseitigen Ende des etwa senkrecht zur Anlagefläche (1, 4) verlaufenden Schenkels (10) des Andrückelements (8) eine Andrückrundung (11) ausgeformt ist.

8. Spannvorrichtung nach Anspruch 5 in Verbindung mit einem der Ansprüche 6 oder 7, **dadurch gekennzeichnet, daß** der etwa parallel zur Anlagefläche (1, 4) verlaufende Schenkel (9) am von der Verbindungsstelle mit dem anderen Schenkel (10) abgewandten Ende über ein Gelenk (12) an dem Hohlkörper (13) angelenkt ist.

9. Spannvorrichtung nach Anspruch 8, **dadurch gekennzeichnet, daß** in der Nähe des Gelenks (12) die Druckmembran (14) auf die von der Anlagefläche (1, 4) abgewandte Seite des etwa parallel zur Anlagefläche (1, 4) verlaufenden Schenkels (9) einwirken kann.

10. Spannvorrichtung nach einem der Ansprüche 6 bis 9, **dadurch gekennzeichnet, daß** in einer Richtung senkrecht zu dem etwa parallel zur Anlagefläche (1, 4) verlaufenden Schenkel (9) und etwa parallel zur Anlagefläche (1, 4) die Andrückelemente (8) im wesentlichen dicht aneinanderliegen, wobei ihre Breite an eine Welligkeit der Karosseriebauteile (5, 6) anpaßbar ist.

11. Spannvorrichtung nach einem der Ansprüche 1 bis 3, **dadurch gekennzeichnet, daß** der Hohlkörper (19) einen im wesentlichen rechteckigen Querschnitt aufweist, wobei die der Anlagefläche (1, 4) zugewandte Seite des Hohlkörpers (19) Bohrungen (23) für die Führung der Andrückelemente (21) aufweist.

12. Spannvorrichtung nach Anspruch 11, **dadurch gekennzeichnet, daß** die Andrückelemente (21) als Druckstempel ausgeführt sind.

13. Spannvorrichtung nach Anspruch 12, **dadurch gekennzeichnet, daß** die Druckstempel (21) jeweils über einen Kopf (20) verfügen, der mit der Druckmembran (14) in Wirkverbindung steht.

14. Spannvorrichtung nach einem der Ansprüche 1 bis 13, **dadurch gekennzeichnet, daß** die Anlagefläche (1) aus der Oberfläche einer ebenen Platte (Standplatte 1a) besteht.

15. Spannvorrichtung nach einem der Ansprüche 1 bis 13, **dadurch gekennzeichnet, daß** die Anlagefläche als 3D-Kontur (4) ausgeführt ist, die zumindest im wesentlichen an die Kontur der Karosseriebauteile (5, 6) angepaßt ist.

## Claims

1. Clamping device for securing vehicle-body components (5, 6) with a three-dimensional surface which are configured, in particular, as metal sheets, comprising an abutment surface (1, 4), against which the vehicle-body components (5, 6) can butt, and pressure-exerting elements (8, 21), which are in operative connection with a pneumatically and/or hydraulically activatable pressure diaphragm (14) and which can press the vehicle-body components (5, 6) against one another and/or against the abutment surface (1), it being the case that the clamping device comprises a hollow body (13, 19) which accommodates the pressure diaphragm (14), and that the pressure-exerting elements (8, 21) and the pressure diaphragm (14) are secured on a clamping component (16a) which moves in the direction of the abutment surface (1, 4) and can be fixed in relation to the latter, it being the case that the clamping component (16a) has a three-dimensional surface (16) which is adapted at least essentially to the three-dimensional surface of the vehicle-body components (5, 6), and the hollow body (13, 19) has a three-dimensional surface which is adapted essentially to the three-dimensional surface (16) of the clamping component (16a) and which is fastened on the three-dimensional surface (16) formed by the clamping component (16a).

2. Clamping device according to Claim 1, **characterized in that** the clamping component can be pivoted in relation to the abutment surface (1, 4) about a lockable rotary articulation (3).

3. Clamping device according to either of Claims 1 and 2, **characterized in that** the pressure diaphragm (14) is formed by a tubular, expansible element which can be coupled to a pneumatic and/or hydraulic pressure line.

4. Clamping device according to Claim 3, **characterized in that** the hollow body (13) has a U-shaped cross section and is open on the side which is directed towards the abutment surface (1, 4), it being possible for the pressure diaphragm (14) to act on the pressure-exerting elements (8) on the open side of the hollow body (13).

5. Clamping device according to Claim 4, **characterized in that** the pressure-exerting elements (8) are fastened pivotably on the hollow body (13).

6. Clamping device according to either of Claims 4 and 5, **characterized in that** the pressure-exerting elements (6) are at least essentially in the form of an L with a leg (9) running approximately parallel to the abutment surface (1, 4) and a leg (10) running approximately perpendicularly to the abutment surface (1, 4).

7. Clamping device according to Claim 6, **characterized in that** a rounded pressure-exerting formation (11) is provided at the abutment-surface end of the leg (10) of the pressure-exerting element (8), said leg running approximately perpendicularly to the abutment surface (1, 4).

8. Clamping device according to Claim 5 in conjunction with either of Claims 6 and 7, **characterized in that** the leg (9), running approximately parallel to the abutment surface (1, 4), is articulated, at the end which is directed away from the connecting location to the other leg (10), on the hollow body (13) via an articulation (12).

9. Clamping device according to Claim 8, **characterized in that**, in the vicinity of the articulation (12), the pressure diaphragm (14) can act on that side of the leg (9), running approximately parallel to the abutment surface (1, 4), which is directed away from the abutment surface (1, 4).

10. Clamping device according to one of Claims 6 to 9, **characterized in that**, in a direction perpendicular to the leg (9), running approximately parallel to the abutment surface (1, 4), and approximately parallel to the abutment surface (1, 4), the pressure-exerting elements (8) butt essentially closely against one another, it being possible for their width to be adapted to a corrugated formation of the vehicle-body components (5, 6).

11. Clamping device according to one of Claims 1 to 3, **characterized in that** the hollow body (19) has an essentially rectangular cross section, that side of the hollow body (19) which is directed towards the abutment surface (1, 4) having bores (23) for the guidance of the pressure-exerting elements (21).

12. Clamping device according to Claim 11, **characterized in that** the pressure-exerting elements (21) are configured as pressure rams.

13. Clamping device according to Claim 12, **characterized in that** the pressure rams (21) each have a head (20) which is in operative connection with the pressure diaphragm (14).

14. Clamping device according to one of Claims 1 to 13, **characterized in that** the abutment surface (1) comprises the surface of a planar plate (standing plate 1a).

15. Clamping device according to one of Claims 1 to 13, **characterized in that** the abutment surface is configured as a 3-dimensional contour (4) which is adapted at least essentially to the contour of the vehicle-body components (5, 6).

## Revendications

1. Dispositif de serrage pour le maintien de composants de carrosserie (5, 6) à surface tridimensionnelle, en particulier réalisés sous la forme de tôles, comprenant une surface de pose (1, 4) sur laquelle les composants de carrosserie (5, 6) peuvent venir être posés, ainsi que des éléments de poussée (8, 21) qui coopèrent avec une membrane de poussée (14) sollicitée pneumatiquement et/ou hydrauliquement et qui peuvent repousser les composants de carrosserie (5, 6) l'un contre l'autre et/ou contre la surface de pose (1), le dispositif de serrage comprenant un corps creux (13, 19) qui loge la membrane de poussée (14), les éléments de poussée (8, 21) et la membrane de poussée (14) étant maintenus sur un composant de serrage (16a) qui se déplace en direction de la surface de pose (1, 4) et qui peut être immobilisé par rapport à cette dernière, le composant de serrage (16a) présentant une surface tridimensionnelle (16) qui est adaptée au moins essentiellement à la surface tridimensionnelle des composants de carrosserie (5, 6), **caractérisé en ce que** le corps creux (13, 19) présente une surface tridimensionnelle qui est essentiellement adaptée à la surface tridimensionnelle (16) du composant de serrage (16a) et qui est fixé à la surface tridimensionnelle (16) formée par le composant de serrage (16a).

2. Dispositif de serrage selon la revendication 1, **caractérisé en ce que** le composant de serrage peut pivoter par rapport à la surface de pose (1, 4) autour d'une articulation de rotation (3) verrouillable.

3. Dispositif de serrage selon l'une des revendications 1 ou 2, **caractérisé en ce que** la membrane de poussée (14) est formée d'un élément extensible en forme de tuyau flexible qui peut être accouplé à un conduit sous pression pneumatique et/ou hydraulique.

4. Dispositif de serrage selon la revendication 3, **caractérisé en ce que** le corps creux (13) présente une section transversale en forme de U et est ouvert sur son côté tourné vers la surface de pose (1, 4) la membrane de poussée (14) pouvant agir sur les éléments de poussée (8) sur le côté ouvert du corps creux (13).

5. Dispositif de serrage selon la revendication 4, **caractérisé en ce que** les éléments de poussée (8) sont fixés à pivotement sur le corps creux (13).

6. Dispositif de serrage selon l'une des revendications 4 ou 5, **caractérisé en ce que** les éléments de poussée (8) présentent au moins essentiellement la forme d'un L avec une branche (9) qui s'étend sensiblement à la parallèle à la surface de pose (1, 4) et une branche (10) qui s'étend sensiblement à la perpendiculaire de la surface de pose (1, 4).

7. Dispositif de serrage selon la revendication 6, **caractérisé en ce qu'**à l'extrémité située du côté de la surface de pose de la branche (10), qui s'étend sensiblement à la perpendiculaire de la surface de pose (1,4), de l'élément de poussée (8) est formé un arrondi de poussée (11).

8. Dispositif de serrage selon la revendication 5 en association avec l'une des revendications 6 ou 7, **caractérisé en ce qu'**à l'extrémité non tournée vers le point de liaison avec l'autre branche (10), la branche (9) qui s'étend sensiblement à la parallèle de la surface de pose (1,4) est articulée sur le corps creux (13) par une articulation (12).

9. Dispositif de serrage selon la revendication 8, **caractérisé en ce qu'**à proximité de l'articulation (12), la membrane de poussée (14) peut agir sur le côté, non tourné vers la surface de pose (1, 4), de la branche (9) qui s'étend sensiblement à la parallèle de la surface de pose (1, 4).

10. Dispositif de serrage selon l'une des revendications 5 à 9, **caractérisé en ce que** dans une direction perpendiculaire à la branche (9) qui s'étend sensiblement à la parallèle de la surface de pose (1, 4) et sensiblement parallèle à la surface de pose (1, 4), les éléments de poussée (8) reposent l'un contre l'autre de manière essentiellement étanche, leur largeur pouvant être adaptée à une ondulation des composants de carrosserie (5, 6).

11. Dispositif de serrage selon l'une des revendications 1 à 3, **caractérisé en ce que** le corps creux (19) présente une section transversale essentiellement rectangulaire, le côté du corps creux (19) tourné vers la surface de pose (1, 4) présentant des alésages (23) pour le guidage des éléments de poussée (21).

12. Dispositif de serrage selon la revendication 11, **caractérisé en ce que** les éléments de poussée (21) sont réalisés comme tampons de poussée.

13. Dispositif de serrage selon la revendication 12, **caractérisé en ce que** les tampons de poussée (21) disposent chacun d'une tête (20) qui coopère avec la membrane de poussée (14).

14. Dispositif de serrage selon l'une des revendications 1 à 13, **caractérisé en ce que** la surface de pose (1) est constituée de la surface d'une plaque plane (plaque d'appui 1a).

15. Dispositif de serrage selon l'une des revendications 1 à 13, **caractérisé en ce que** la surface de pose est réalisée comme contour tridimensionnel (4) qui est adapté au moins essentiellement au contour des composants de carrosserie (5, 6).
